# EUROPEAN PATENT SPECIFICATION

(11) **EP 0 432 247 B1**
(45) Date of publication and mention of the grant of the patent: **21.12.1994**
(21) Application number: 90909696.8
(22) Date of filing: 02.07.1990
(51) Int. Cl.: A01F 12/44, A01F 12/18

(54) **A COMBINE HARVESTER WITH AN ADDITIONAL SEPARATING UNIT**
MÄHDRESCHER MIT EINER ZUSÄTZLICHEN TRENNVORRICHTUNG
MOISSONNEUSE-BATTEUSE A UNITE DE SEPARATION SUPPLEMENTAIRE

(30) Priority: 04.07.1989 IT 6755089
(43) Date of publication of application: 19.06.1991
(73) Proprietor: NEW HOLLAND BELGIUM N.V., B-8210 Zedelgem (BE)
(72) Inventor: MARCHETTI, Enzo, I-36042 Breganze (IT); BOSCHIERO, Lucio, I-36030 Fara Vicentino (IT)
(74) Representative: Saconney, Piero
(86) International application number: EP9001053
(87) International publication number: WO9100001

(56) References cited:
- AU-A- 1 236 370
- US-A- 2 587 851
- US-A- 2 867 218
- US-A- 3 678 936

## Description

The present invention relates to a combine harvester of the type comprising:
a thresher unit comprising a threshing cylinder and a thresher concave in the form of a concave grid surrounding a lower portion of the threshing cylinder,
a shaker unit arranged to receive the straw output from the thresher unit, and
an additional separating unit interposed between the thresher unit and the shaker unit, comprising a separating roller which rotates about an axis transverse the length of the machine and a concave separator grid surrounding a lower portion of the separating roller.

A combine harvester of the type indicated above is described and illustrated, for example, in Italian patent No. 905489. The additional separating unit of this machine considerably improves the overall harvesting capacity of the machine but, at the same time, may be unsuitable when operating on crops in certain conditions (very fragile, long, wet, twisted straw, etc.). In fact, with these particular crops, the straw may be crushed, causing a quantity of short pieces of straw to arrive in the cleaning unit of the machine and overloading the latter to the detriment of its cleaning capacity, or, in different conditions, the additional separating unit may sometimes become blocked and jammed.

In order to avoid the aforesaid problem, the subject of the present invention is a combine harvester of the type indicated above, characterised in that the separating grid of the additional separating unit is mounted on the structure of the machine so that it can move between its operative position beneath the separating roller and an inoperative position in which the additional separating unit is deactivated.

In a preferred embodiment, the loading end of the shaker unit extends to a position beneath the additional separating unit so that, when the removable grid is in its inoperative position, the crop leaving the thresher unit is discharged directly onto the shaker unit.

In this embodiment, the separating grid is preferably fixed to two side walls which are mounted on the structure of the machine for rotation about an axis substantially coincident with the axis of the separating roller of the additional separating unit so that the separator grid can be moved between its operative position beneath the separating roller and an inoperative position in which the grid is situated above the separating roller.

When the separating grid is brought to its inoperative position, the additional separating unit is rendered inactive and the straw leaving the thresher unit falls directly onto the loading end of the shaker unit which, as indicated above, extends - in the preferred embodiment - to a position beneath the additional separating unit.

According to a known technique, a beater roll is interposed between the threshing cylinder and the separating roller of the additional separating unit and cooperates with an auxiliary grid interposed between the thresher concave and the separator grid of the additional separating unit. A further preferred characteristic of the invention lies in the fact that the rear end of the auxiliary grid (with reference to the direction of advance of the machine) is articulated to the separator grid about a transverse axis and in that the front end of the auxiliary grid engages two lateral guides on the structure of the machine so that, when the separator grid is moved between its operative position and its inoperative position, the auxiliary grid is also moved between an operative position and an inoperative position by entrainment with the separator grid.

Further characteristics and advantages of the invention will become clear from the detailed description which follows with reference to the appended drawings, provided purely by way of non-limiting example, in which:
Figure 1 is a schematic longitudinal section of a combine harvester according to the invention,
Figure 2 is a view of the detail II of Figure 1, on an enlarged scale,
Figure 3 is a section taken on the line III-III of Figure 2,
Figure 4 is a schematic view taken on the arrow IV of Figure 3,
Figure 5 is a section taken on the line V-V of Figure 2, on an enlarged scale,
Figure 6 is a section taken on the line VI-VI of Figure 2, on an enlarged scale,
Figure 7 is a section taken on the line VII-VII of Figure 4, on an enlarged scale,
Figure 8 shows a detail of Figure 2 in a different operating condition, on an enlarged scale,
Figure 9 is a section taken on the line IX-IX of Figure 4, on an enlarged scale,
Figure 10 is a view of the detail indicated by the arrow X of Figure 2, on an enlarged scale.

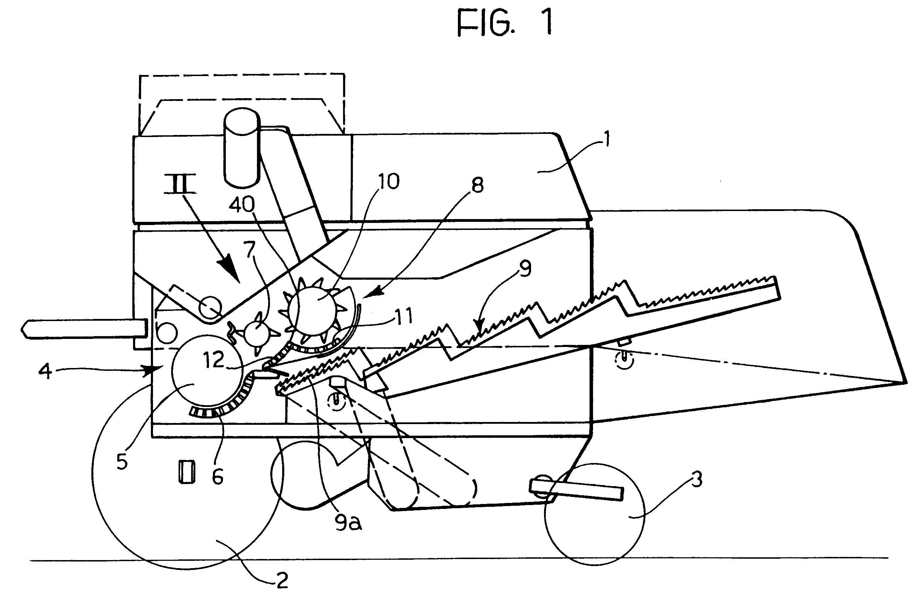

Figure 1 shows schematically a combine harvester having a structure 1 mounted on front driving wheels 2 and rear steerable wheels 3. In this drawing, the front part of the machine including the cutting platform has not been shown for ease of representation, since that part is of known type and in any case does not fall within the scope of the present invention.

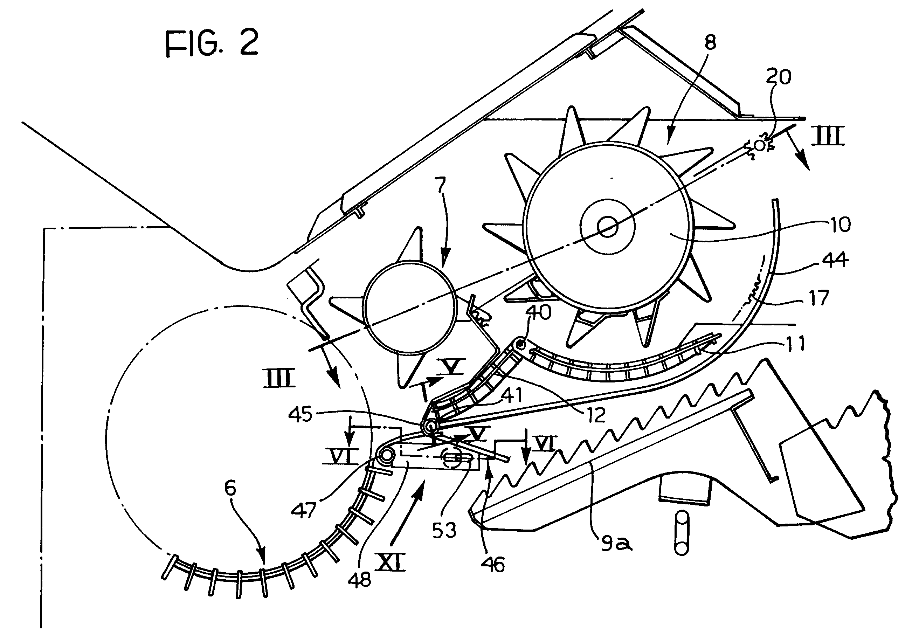

With reference to Figures 1 and 2, the combine harvester includes a conventional thresher unit 4 including a threshing cylinder 5 and a thresher concave 6 surrounding a lower portion of the threshing cylinder 5. The structural details of the threshing cylinder 5 and the thresher concave 6 are not shown since these devices are of conventional type and do not fall within the scope of the present invention. Still according to a conventional technique, the machine also includes a beater roll 7 situated to the rear of the threshing cylinder 5 (with reference to the direction of advance of the machine). Finally, according to a solution provided, for by the Italian Patent No. 905489 cited above, the machine includes an additional separating unit 8 interposed in the path which the straw leaving the thresher unit 4 is intended to follow towards the conventional shaker unit 9. According to Italian Patent No. 905489, the additional separating unit includes a separating roller 10 which cooperates with a concave separator grid 11 beneath the separator roller 10. An auxiliary grid 12 is interposed between the thresher concave 6 and the separator grid 11 and cooperates with the beater roll 7.

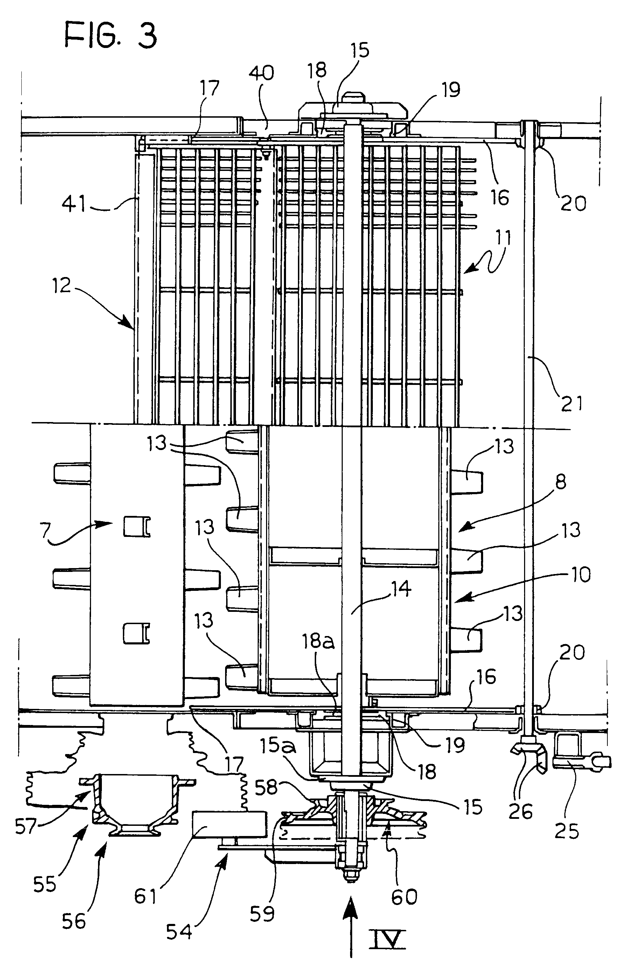

The structure of the additional separating unit 8 will now be described in greater detail with reference to Figures 2-5. As can be seen in Figures 2 and 3, the separating roller 10 is constituted by a sheet-metal cylinder with a plurality of teeth 13 on its external wall for cooperating with the separator grid 11 to effect the separation. The sheet-metal cylinder constituting the roller 10 is mounted on a shaft 14 whose ends are mounted rotatably on the sides which form part of the fixed structure of the machine by means of support members 15. The support members 15 are of a conventional type available commercially and are each constituted by a box including a rolling bearing for supporting the shaft and having a flange 15a which can be fixed to the structure of the machine. As will be described in more detail below, the position of each support member 15 is adjustable relative to the fixed structure of the machine.

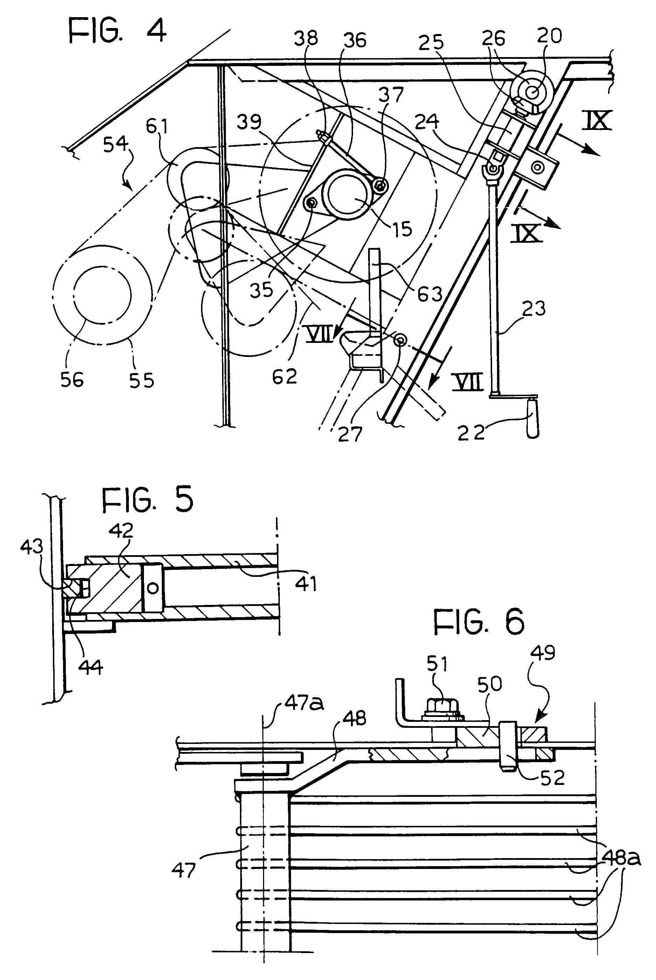

The structure of the separator grid 11 is of the conventional type normally adopted for the thresher concave and is constituted by intersecting flat steel sections. The structure of the grid can be seen in the upper part of Figure 3, where the structures of the separating roller 8 and the beater roll 7 have not been shown. The two sides of the grid 11 are fixed by screws to two side walls 16 each having a circular, toothed edge 17. A central ring 18 is fixed by means of screws to each side wall 16, its outer edge being supported rotatably by a support ring 19 carried by the fixed structure of the machine. The shaft 14 which supports the separating roller 8 is inserted through the wide hole 18a in each ring 18 so that the position of the shaft 14 can be adjusted relative to the axis of rotation of the walls 16, as will be described in detail below. The toothed edges 17 of the two side walls 16 fixed to the separator grid 11 mesh with two drive pinions 20 carried by a common transverse shaft 21. The shaft 21 can be driven by means of a crank 22 (Figure 4) connected by a rod 23 and a universal joint 24 to a shaft 25 which in turn is connected to the shaft 21 by means of a pair of bevel gears 26 (see Figures 3 and 4). Obviously, any other type of transmission may be used instead of the pair of bevel gears 26 and, in particular, a worm screw-helical gear reducter can be used, which makes the deactivation of the separator grid quicker and easier. This type of transmission also has the advantage that, since it cannot be reversed, it ensures that the grid is positioned securely, whatever its position.

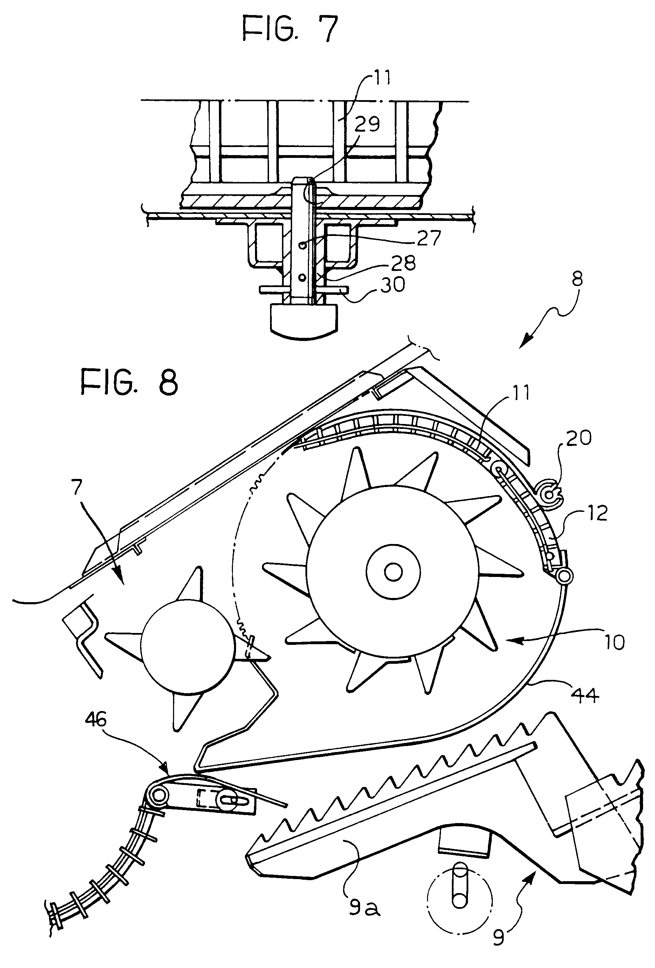

When the separator grid 11 is situated in its operative position shown in Figures 2 and 3, it is locked in that position by means of locating pins 27 (Figures 4 and 7) each of which engages a bush 28 welded to the fixed structure of the machine and a hole 29 formed in the side wall carried by the separator grid 11. Each pin 27 can be locked in its operative position by means of an auxiliary transverse pin 30.

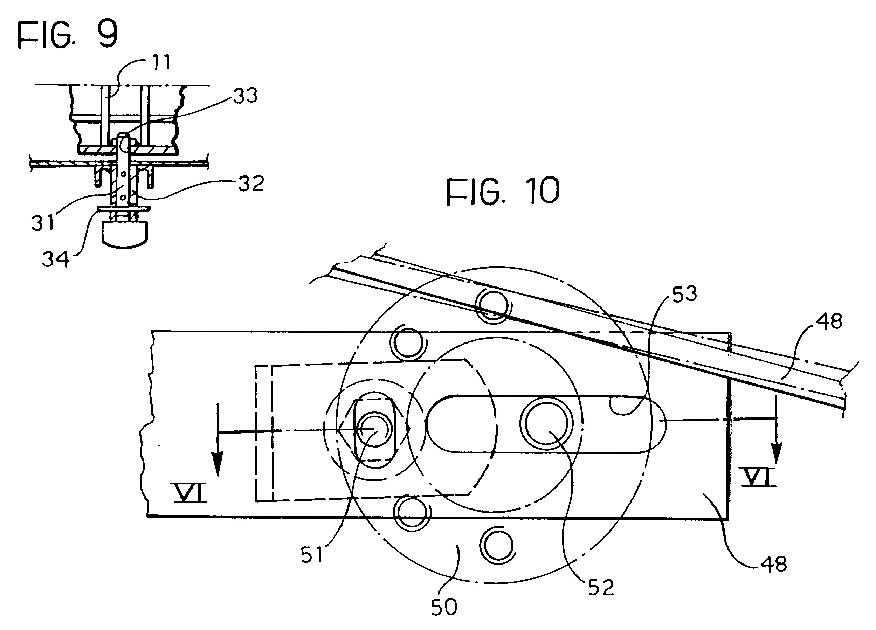

By acting on the crank 22, the operator can bring the grid 11 to the inoperative position shown in Figure 8, in which it is situated above the separating roller and the additional separating unit is deactivated. The grid 11 can be locked in the inoperative position by means of locking pins 31 each of which engages a bush 32 fixed to the structure of the machine and a hole 33 formed in the structure of the separator grid 11, the pin 31 being lockable by means of an auxiliary transverse pin 34 (Figure 9). Obviously, a snap-location system may also be provided for the end position which corresponds to the complete deactivation of the separating grid.

With reference to Figure 4, each support member 15 for the shaft 14 of the separating roller 8 is pivotably mounted on the fixed structure of the machine at 35 and can be oriented about the axis 35 by means of a tie rod 36 which is articulated to the support member 15 at 37. The tie rod 36 has a threaded portion engaged in an adjustment nut 38 which abuts a wall 39 of the fixed structure of the machine.

The adjustment of the tie rod 36 changes the position of the support shaft of the separating roller 10 relative to the axis of the rotatable support of the separator grid 11. In short, the distance between the separating roller 10 and the separator grid 11 is adjusted to enable the machine to be adapted to the specific characteristics of the crop on which it is to operate. As already seen, when it is necessary to deactivate the additional separating unit due to its unsuitability for the specific crop on which the machine is to operate, the crank 22 is operated (after the pins 27 have been released) to bring the grid 11 to the inoperative position shown in Figure 8, in which the grid 11 can be locked by means of the pins 31. In this condition, the straw leaving the thresher unit is discharged directly onto the front end 9a of the shaker unit 9 which extends beneath the additional separating unit 8 for this purpose.

According to a further characteristic of the invention, the rear of the auxiliary grid 12 is connected to the separator grid 11 for pivoting about the transverse axis 40, whilst its front edge carries a tubular element 41 each end of which supports a rubber block 42 (Figure 5) with a groove 43. The groove 43 is engaged on a guide rib 44 carried by the side of the machine (Figures 2, 5) and serves to guide the movement of the auxiliary grid 12 as it is entrained by the main grid 11 when the operator works the crank 22. When the crank 22 is operated in order to bring the separator grid 11 from the operative position illustrated in Figure 2 to the inoperative position shown in Figure 8, therefore, the grid 12 follows the grid 11 until it reaches the position shown in Figure 8. When the grids are returned to the operative position shown in Figure 2, the front edge of the auxiliary grid 12 abuts two C-shaped fixed side brackets 45.

The structure of the beater roll 7 has not been described in detail, since it is of conventional type and is similar to that of the separating roller 10.

When the grids 11, 12 are in their inoperative position shown in Figure 8, the straw leaving the thresher unit is conveyed by the beater roll 7 directly onto the loading end 9a of the shaker unit 9, as indicated above. In this condition, the beater roll 7 cooperates with a comb-like discharge surface 46. As can be seen in Figures 6, 11, the comb is constituted by a transverse tubular element 47 carrying a plurality of spaced-apart elongate teeth 48. The tubular element 47 is supported rotatably by the fixed structure of the machine and is fixed to a lever 48 whose position is adjustable by means of an eccentric device 49. This device includes a disc 50 which is mounted rotatably on the fixed structure of the machine and can be fixed in a particular angular position by means of a screw 51. The disc 50 carries an eccentric pin 52 which engages a slot 53 in the lever 48. The variation of the angular position of the disc 50 therefore varies the angular position of the lever 48, and hence of the whole comb 46, relative to the axis 47a of the tubular element 47. This adjustment enables the machine to be adapted to the characteristics of the crop so as to enable the crop to be supplied evenly to the shaker unit without the risk of blockages.

With reference to Figure 3, the separating roller 10 is connected by a belt transmission 54 for rotation with the beater roll 7 which in turn is driven by the transmission members of the machine (not shown). As can be seen in Figure 3, the belt transmission 54 comprises a belt which is normally engaged in a seat 55 of a pulley 57 mounted on the roll 7. At the same time, the transmission belt 54 is selectively engageable in two seats 58, 59 of different diameters which form parts of a pulley 60 mounted for sliding, by means of a splined coupling, on the shaft 14 of the separating roller 10 and provided with means (of the type normally used in motor-vehicle gear changes) for its snap-location in the two operative positions corresponding to two different operating speeds of the separating roller 10 which can be selected in dependence on the crop being dealt with (for example, the higher speed for grain and rice and the lower speed for maize and soya). The belt is tensioned by means of a belt-tensioning wheel 61 (see also Figure 4) which can be operated, for example, by means of a rod 62 (shown only schematically in Figure 4), by a hand-operated lever 63 which is mounted for pivoting on the fixed structure of the machine and can be locked in a particular operative position by any known means. The two operating speeds of the separating roller 10 are therefore selected, after the belt has been slackened and the pulley 60 moved axially, by acting manually on the belt to engage it in the desired seat on the pulley. When the separator grid 11 is in the inoperative position, the roller 10 is rotated at a third speed which is slower than both its operating speeds so as, on the one hand, to prevent unnecessary power consumption and, on the other hand, to facilitate the advance of the crop towards the rear part of the machine, thus avoiding the risk of blockages. In order to achieve this third speed, the belt is engaged on a second seat 56 of the pulley 57 and on the seat 59 of the pulley 60, obviously after the belt has been slackened as indicated above.

Naturally, the principle of the invention remaining the same, the details of construction and forms of embodiment may be varied widely with respect to those described and illustrated purely by way of example, without thereby departing from the scope of the present invention. For example, the belt-tensioning device could include a crank for operating the belt-tensioning wheel, with the advantage that the degree of tensioning could be adjusted without the need to use additional tools such as spanners or the like.

## Claims

1. A combine harvester including a thresher unit (4) comprising a threshing cylinder (5) and a thresher concave (6) in the form of a concave grid surrounding a lower portion of the threshing cylinder (5),
a shaker unit (9) arranged to receive the straw from the thresher unit (4), and
a separating unit (8) interposed between the thresher unit (4) and the shaker unit (9), comprising a separating roller (10) which rotates about an axis transverse to the length of the machine and a concave separator grid (11) surrounding a lower portion of the separating roller (10),
characterised in that the separator grid (11) is mounted on the structure of the machine so that it can move between its operative position beneath the separating roller and an inoperative position in which the separating unit is deactivated, so that the crop leaving the thresher unit (4) is discharged directly onto the shaker unit (9).

2. A combine harvester according to Claim 1, characterised in that loading end (9a) of the shaker unit (9) extends to a position beneath the separating unit (8) so that, when the separator grid (11) is in its inoperative position, the crop leaving the thresher unit (4) is discharged directly onto the shaker unit (9).

3. A combine harvester according to Claim 1, characterised in that the separator grid (11) of the separating unit (8) is fixed to two side walls (16) which are mounted on the structure of the machine for rotation about an axis substantially coincident with the axis of the separating roller (10) of the separating unit (8) so that the separator grid (11) can be moved between its operative position beneath the separating roller (10) and an inoperative position in which the separator grid (11) is situated above the separating roller (10).

4. A combine harvester according to Claim 3, in which a beater roll (7) is interposed between the threshing cylinder (5) and the separating roller (10) and cooperates with an auxiliary grid (12) interposed between the thresher concave (6) and the separator grid (11) of the separating unit (8), characterised in that the rear of the auxiliary grid (12) (with reference to the direction of advance of the machine) is articulated to the separator grid (11) about a transverse axis (40), and in that the front of the auxiliary grid (12) engages two lateral guides (44) on the fixed structure of the machine so that, when the separator grid (11) is moved between its operative position and its inoperative position, the auxiliary grid (12) is also moved between an operative position and an inoperative position by entrainment with the separator grid (11).

5. A combine harvester according to Claim 3, characterised in that at least one of the said side walls (16) fixed to the separator grid carries a toothed sector (17) which meshes with a drive pinion (20) connected to drive means for moving the separator grid.

6. A combine harvester according to Claim 5, characterised in that the drive means comprise a hand-operated crank (22) connected by a mechanical transmission to two drive pinions (20) meshed with respective toothed sectors (17) associated with the two side walls (16) of the separator grid (11).

7. A combine harvester according to Claim 3, characterised in that each side wall (16) carries a central ring (18) whose outer edge is supported rotatably by a corresponding support ring (19) fixed to the fixed structure of the machine, and in that the separating roller (10) has a support shaft (14) which is inserted through the hole in the central ring (18) of each side wall (16) and is supported at each end for rotation on the fixed structure of the machine by means of a support member (15) whose position is adjustable.

8. A combine harvester according to Claim 3, characterised in that locking pins are provided for locking the separator grid (11) in its operative position and in its inoperative position respectively.

9. A combine harvester according to Claim 3, characterised in that a comb-like discharge surface (46 ) whose position is adjustable is located to the rear of the thresher unit for discharging the crop directly onto the shaker unit (9) when the separator grid (11) is in its inoperative position.

10. A combine harvester according to Claim 3, characterised in that the shaft (14) for supporting the separating roller (10) is connected to the transmission system of the machine for rotation by means of a belt transmission (54) including a belt which can be engaged selectively on pulley tracks of different diameters.

## Patentansprüche

1. Ein Mähdrescher mit einem Dreschwerk (4), bestehend aus einer Dreschtrommel (5) und einem Dreschkorb (6) in Form eines konkaven Gitters, das den unteren Teil der Dreschtrommel (5) umschließt,
einem Strohschüttler (9), der so angeordnet ist, daß er das vom Dreschwerk (4) abgegebene Stroh aufnehmen kann, und
einem Kornabscheider (8), der zwischen dem Dreschwerk (4) und dem Strohschüttler (9) angeordnet ist und aus einer Abscheidetrommel (10), die um eine quer zur Länge der Erntemaschine verlaufende Achse rotiert, und einem konkaven Abscheidegitter (11), das den unteren Teil der Abscheidetrommel (10) umfaßt, besteht,
dadurch gekennzeichnet, daß das Abscheidegitter (11) so in die Erntemaschine eingebaut ist, daß es zwischen einer Arbeitsstellung unter der Abscheidetrommel und einer Ruhestellung, in der der Kornabscheider außer Betrieb ist, bewegt werden kann, so daß das das Dreschwerk (4) verlassende Dreschgut direkt auf den Strohschüttler (9) gelangt.

2. Ein Mähdrescher nach Anspruch 1, dadurch gekennzeichnet, daß die das Stroh aufnehmende Seite (9a) des Strohschüttlers (9) bis unter den Kornabscheider (8) reicht, so daß - befindet sich das Abscheidegitter (11) in seiner Ruhestellung - das das Dreschwerk (4) verlassende Dreschgut direkt auf den Strohschüttler (9) gelangt.

3. Ein Mähdrescher nach Anspruch 1, dadurch gekennzeichnet, daß das Abscheidegitter (11) des Kornabscheiders (8) an zwei Seitenwänden (16) befestigt ist, die um eine im wesentlichen mit der Achse der Abscheidetrommel (10) des Kornabscheiders (8) übereinstimmende Achse schwenkbar angeordnet sind, so daß das Abscheidegitter (11) zwischen einer Arbeitsstellung unter der Abscheidetrommel (10) und einer Ruhestellung, in der das Abscheidegitter (11) über der Abscheidetrommel (10) gehalten wird, bewegt werden kann.

4. Ein Mähdrescher nach Anspruch 3, in dem zwischen der Dreschtrommel (5) und der Abscheidetrommel (10) eine Strohleittrommel (7) angeordnet ist, die von einem Hilfsgitter (12) zwischen dem Dreschkorb (6) und dem Abscheidegitter (11) des Kornabscheiders (8) unterstützt wird, dadurch gekennzeichnet, daß das hintere Ende des Hilfsgitters (12) (im Verhältnis zur Arbeitsrichtung der Erntemaschine) entlang einer quer verlaufenden Achse (40) mit dem Abscheidegitter (11) beweglich verbunden ist, und darin, daß das vordere Ende des Hilfsgitters (12) in zwei seitlichen Führungsschienen (44) liegt, die so in die Erntemaschine eingebaut sind, daß bei der Bewegung des Abscheidegitters (11) zwischen Arbeitsstellung und Ruhestellung auch das Hilfsgitter (12) durch segne Verbindung mit dem Abscheidegitter (11) zwischen einer Arbeit- und einer Ruhestellung bewegt wird.

5. Ein Mähdrescher nach Anspruch 3, dadurch gekennzeichnet, daß zumindest eine der am Abscheidegitter befestigten Seitenwände (16) über einen gezahnten Bereich (17) verfügt, in den ein Antriebsritzel (20) greift, das mit einem Mechanismus für die Bewegung des Abscheidegitters verbunden ist.

6. Ein Mähdrescher nach Anspruch 5, dadurch gekennzeichnet, daß dieser Mechanismus aus einer von Hand zu bedienenden Kurbel (22) besteht, die über eine mechanische Transmissionsvorrichtung mit zwei Antriebsritzeln (20) verbunden ist, die in die jeweiligen gezahnten Bereiche (17) an den Seitenwänden (16) des Abscheidegitters (11) greifen.

7. Ein Mähdrescher nach Anspruch 3, dadurch gekennzeichnet, daß jede Seitenwand (16) einen mittig angeordneten Ring (18) trägt, dessen äußerer Rand drehbar in einem entsprechenden Lagerring (19) gelagert wird, der am Rahmen der Erntemaschine befestigt ist, und daß die Abscheidetrommel (10) über eine sie tragende Welle (14) verfügt, die durch die Öffnung des an jeder Seitenwand (16) mittig angeordneten Ringes (18) eingeführt und an jedem Ende mittels eines verstellbar angeordneten Lagers (15) drehbar im Rahmen der Erntemaschine gelagert wird.

8. Ein Mähdrescher nach Anspruch 3, dadurch gekennzeichnet, daß die Verriegelung des Abscheidegitters (11) in seiner Arbeits- oder Ruhestellung durch Fixierstifte erfolgt.

9. Ein Mähdrescher nach Anspruch 3, dadurch gekennzeichnet, daß eine kammartige, verstellbar angeordnete Entladefläche (46) an der Rückseite des Dreschwerkes angebracht ist so daß das Dreschgut - befindet sich das Abscheidegitter (11) in der Ruhestellung - direkt auf den Strohschüttler (9) gelangt.

10. Ein Mähdrescher nach Anspruch 3, dadurch gekennzeichnet, daß die die Abscheidetrommel (10) tragende Welle (14) mit dem Transmissionssystem der Erntemaschine, das Drehbewegungen mit einem Riemensystem (54) überträgt, verbunden ist, und daß dieses Riemensystem einen Riemen einschließt, der wahlweise auf die Laufflächen von Riemenscheiben mit unterschiedlichem Durchmesser gezogen werden kann.

## Revendications

1. Moissonneuse-batteuse comportant un ensemble (4) formant batteur comportant un cylindre batteur (5) et une partie concave (6) de batteur ayant la forme d'une grille concave entourant une partie inférieure du cylindre batteur (5),
un ensemble formant vibreur (9) agencé pour recevoir la paille provenant de l'ensemble (4) formant batteur, et
un ensemble de séparation (8) interposé entre l'ensemble (4) formant batteur et l'ensemble formant vibreur (9), comportant un rouleau de séparation (10) qui tourne autour d'un axe transversal à la longueur de la machine et une grille de séparation concave (11) entourant une partie inférieure du rouleau de séparation (10),
caractérisée en ce que la grille de séparation (11) est montée sur la structure de la machine de telle sorte qu'elle peut être déplacée entre une position active située en dessous du rouleau de séparation et une position inactive dans laquelle l'ensemble de séparation est désactivé, de sorte que la récolte quittant l'ensemble (4) formant batteur est déchargée directement sur l'ensemble formant vibreur (9).

2. Moissonneuse-batteuse selon la revendication 1, caractérisée en ce que l'extrémité de chargement (9a) de l'ensemble formant vibreur (9) s'étend vers une position située en dessous de l'ensemble de séparation (8) de sorte que lorsque la grille de séparation (11) est dans sa position inactive, la récolte quittant l' ensemble (4) formant batteur est déchargée directement sur l'ensemble formant vibreur (9).

3. Moissonneuse-batteuse selon la revendication 1, caractérisée en ce que la grille de séparation (11) de l'ensemble de séparation (8) est fixée sur deux parois latérales (16) qui sont montées sur la structure de la machine pour tourner autour d'un axe coïncidant à-peu-près avec l'axe du rouleau de séparation (10) de l'ensemble de séparation (8) de sorte que la grille de séparation (11) peut être déplacée entre sa position active située sous le rouleau de séparation (10) et une position inactive dans laquelle la grille de séparation (11) est située au-dessus du rouleau de séparation (10).

4. Moissonneuse-batteuse selon la revendication 3, dans laquelle un rouleau de batteur (7) est interposé entre le cylindre batteur (5) et le rouleau de séparation (10) et coopère avec une grille auxiliaire (12) interposée entre la partie concave (6) de batteur et la grille de séparation (11) de l'ensemble de séparation (8), caractérisée en ce que l'arrière de la grille auxiliaire (12), en référence à la direction d'avancée de la machine, est articulé sur la grille de séparation (11) autour d'un axe transversal (40), et en ce que l'avant de la grille auxiliaire (12) vient en prise avec deux guides latéraux (44) situés sur la structure fixe de la machine de sorte que lorsque la grille de séparation (11) est déplacée entre sa position active et sa position inactive, la grille auxiliaire (12) est aussi déplacée entre une position active et une position inactive par entraînement avec la grille de séparation (11).

5. Moissonneuse-batteuse selon la revendication 3, caractérisée en ce qu'au moins une desdites parois latérales (16) fixées sur la grille de séparation supporte un secteur denté (17) qui engrène avec un pignon d'entraînement (20) relié à des moyens d'entraînement pour déplacer la grille de séparation.

6. Moissonneuse-batteuse selon la revendication 5, caractérisée en ce que les moyens d'entraînement comportent une manivelle (22) actionnée à la main reliée par une transmission mécanique à deux pignons d'entraînement (20) qui engrènent avec des secteurs dentés respectifs (17) associés aux deux parois latérales (16) de la grille de séparation (11).

7. Moissonneuse-batteuse selon la revendication 3, caractérisé en ce que chaque paroi latérale (16) supporte un anneau central (18) dont le bord extérieur est supporté de manière à pouvoir tourner par un anneau de support (19) correspondant fixé sur la structure fixe de la machine, et en ce que le rouleau de séparation (10) a un arbre de support (14) qui est inséré à travers le trou existant dans l'anneau central (18) de chaque paroi latérale (16) et est supporté au niveau de chaque extrémité pour tourner sur la structure fixe de la machine, par l'intermédiaire d'un élément de support (15) dont la position peut être réglée.

8. Moissonneuse-batteuse selon la revendication 3,caractérisée en ce que des doigts de verrouillage sont prévus pour verrouiller la grille de séparation (11) dans sa position active et dans sa position inactive respectivement.

9. Moissonneuse-batteuse selon la revendication 3, caractérisée en ce qu'une surface (46) de décharge analogue à un peigne, dont la position peut être réglée, est située à l'arrière de l'ensemble formant batteur pour décharger la récolte directement sur l'ensemble formant vibreur (9) lorsque la grille de séparation (11) est dans sa position inactive.

10. Moissonneuse-batteuse selon la revendication 3, caractérisée en ce que l'arbre (14) destiné à supporter le rouleau de séparation (10) est relié au système de transmission de la machine pour être mis en rotation par l'intermédiaire d'une transmission (54) à courroie comportant une courroie qui peut être en contact de manière sélective avec des gorges de poulie de différents diamètres.
